# EUROPEAN PATENT APPLICATION

(11) **EP 4 722 884 A1**
(43) Date of publication of application: **08.04.2026**
(21) Application number: 24835083.7
(22) Date of filing: 26.03.2024
(51) Int. Cl.: G06F 3/06

(54) **DATA PROTECTION METHOD AND APPARATUS**

(30) Priority: 04.07.2023 CN 202310811989
(71) Applicant: Huawei Technologies Co., Ltd., Shenzhen, Guangdong 518129 (CN)
(72) Inventor: WANG, Yangchao, Shenzhen, Guangdong 518129 (CN); HUANG, Mengyu, Shenzhen, Guangdong 518129 (CN); ZHOU, Qizhang, Shenzhen, Guangdong 518129 (CN); HU, Gang, Shenzhen, Guangdong 518129 (CN)
(74) Representative: Epping - Hermann - Fischer
(86) International application number: PCT/CN2024/083858
(87) International publication number: WO 2025/007596

(57) **Abstract**

A data protection method and apparatus, related to the field of storage technologies, are provided for restoring data in a storage device as completely as possible. In this application, the method includes: A storage device obtains an IO sequence for accessing the storage device, determines a suspicious IO sequence from the IO sequence, where the suspicious IO sequence is initiated by a suspicious host when the suspicious host accesses first data in the storage device, the suspicious IO sequence indicates that the suspicious host has a possibility of damaging data stored in the storage device, and the data stored in the storage device includes the first data, and generates a defense mechanism and a snapshot in response to determining the suspicious IO sequence, where the snapshot is used to restore the data stored in the storage device, and the defense mechanism is used to prevent, before generating the snapshot is completed, the suspicious host from accessing the data stored in the storage device.

## Description

### CROSS-REFERENCE TO RELATED APPLICATIONS

This application claims priority to Chinese Patent Application No. 202310811989.3, filed with the China National Intellectual Property Administration on July 4, 2023 and entitled "DATA PROTECTION METHOD AND APPARATUS", which is incorporated herein by reference in its entirety.

### TECHNICAL FIELD

This application relates to the field of storage technologies, and in particular, to a data protection method and apparatus.

### BACKGROUND

With rapid development of information technologies, data has become one of the most important assets of enterprises and individuals. Security of storage devices that serve as infrastructures for supporting data storage and protection is very important. With popularization of the Internet, network security threats, such as ransomware, are increasingly rampant, and data security becomes a globally common challenge. Once the storage devices are attacked by viruses, data in the storage devices may be damaged and stolen, and extortion may also occur. In addition, in terms of some regulatory and compliance requirements, high requirements are imposed on the security of the storage devices. Therefore, ensuring the security of the storage devices and security of the data stored in the storage devices becomes new requirements of enterprises.

Generally, a storage device periodically generates a snapshot of data in the storage device, to restore the data when the storage device is attacked by viruses. However, in this manner, the data restored based on the snapshot may be a part of the data in the storage device. For example, a snapshot is generated at an interval of 10 minutes, the storage device generates a snapshot at 14:00, and viruses attack the storage device at 14:09. In this case, the storage device can restore data only based on the snapshot generated at 14:00, but cannot restore changed data in the storage device in a time period from 14:00 to 14:09 based on the snapshot.

How to restore data in a storage device as completely as possible is an urgent technical problem to be resolved currently.

### SUMMARY

This application provides a data protection method and apparatus, for restoring user data in a storage device as completely as possible.

According to a first aspect, this application provides a data protection method. The method may be performed by a storage device, or may be performed by a protection module in the storage device; or the method may be performed by a protection device connected to the storage device. An example in which the storage device performs the method is used.

The method includes: The storage device obtains an input/output (input/output) IO sequence for accessing the storage device; determines a suspicious IO sequence from the IO sequence, where the suspicious IO sequence is initiated by a suspicious host when the suspicious host accesses first data in the storage device, the suspicious IO sequence indicates that the suspicious host has a possibility of damaging user data stored in the storage device, and the user data stored in the storage device includes the first data; and further, generates a defense mechanism and a snapshot in response to determining the suspicious IO sequence, where the snapshot is used to restore the user data stored in the storage device, and the defense mechanism is used to prevent, before generating the snapshot is completed, the suspicious host from accessing the user data stored in the storage device. In the foregoing technical solution, after determining the suspicious IO sequence, the storage device generates the defense mechanism and the snapshot, so that in a time period from determining of the suspicious IO sequence to generating of the snapshot, the suspicious host initiating the suspicious IO sequence cannot continue to access the user data in the storage device. Further, a time point corresponding to generating of the snapshot is a time point at which the suspicious IO sequence is found. Assuming that the suspicious host is a host configured to damage the user data stored in the storage device, that is, the suspicious host is an attacker host, a degree of damage caused by the attacker host to the user data at the time point is relatively low. In this way, the storage device can restore the user data in the storage device as completely as possible based on the snapshot.

In a possible implementation, the defense mechanism is specifically used to prevent, before generating the snapshot is completed, the suspicious host from accessing second data, and the second data is user data other than the first data stored in the storage device. In the foregoing technical solution, the storage device protects, by using the defense mechanism, the second data stored in the storage device, to generate a snapshot of the second data, so as to completely restore the second data based on the snapshot.

In a possible implementation, the defense mechanism includes one or two of A and B: A: before generating the snapshot is completed, rejecting an access request of the suspicious host to the storage device; and B: adding preset data to the storage device, so that the suspicious host accesses the preset data before generating the snapshot is completed, where the preset data is not the user data. According to the foregoing two manners, it is beneficial for the storage device to prevent the suspicious host from accessing the data stored in the storage device in the time period from determining of the suspicious IO sequence to generating of the snapshot.

In a possible implementation, after determining the suspicious IO sequence, the storage device may further determine whether the first data is damaged by the suspicious IO sequence. When determining that the first data is damaged by the suspicious IO sequence, the storage device determines that the suspicious host is an attacker host; and/or when determining that the first data is not damaged by the suspicious IO sequence, the storage device determines that the suspicious host is a normal host. In the foregoing technical solution, the storage device further determines, depending on whether the first data is damaged, whether the suspicious host is the attacker host or the normal host, thereby helping improve accuracy of determining.

In a possible implementation, that the storage device determines whether the first data is damaged by the suspicious IO sequence may be specifically: The storage device performs entropy value detection on the first data, to obtain an entropy value of the first data; and when the entropy value is greater than a preset value, determines that the first data is damaged by the suspicious IO sequence; or when the entropy value is less than or equal to the preset value, determines that the first data is not damaged by the suspicious IO sequence. In the foregoing technical solution, the storage device evaluates randomness of the first data based on the entropy value of the first data, and then determines, based on the randomness of the first data, whether the first data is damaged. This has relatively high accuracy.

In a possible implementation, that the storage device performs the entropy value detection on the first data, to obtain the entropy value of the first data may be specifically: The storage device performs sampling on the first data, to obtain sampled data; and performs the entropy value detection on the sampled data, to obtain the entropy value of the first data. In the foregoing technical solution, it is beneficial to reduce computing complexity of the storage device.

In a possible implementation, after determining that the suspicious host is the host configured to damage the user data stored in the storage device (that is, determining that the suspicious host is the attacker host), the storage device may further display alarm information, where the alarm information is used by an administrator to determine whether to disconnect a connection between the attacker host and the storage device. In the foregoing technical solution, the administrator determines whether to disconnect a connection between the attacker host and the storage device, thereby helping improve management flexibility.

In a possible implementation, after generating the snapshot used to restore the user data stored in the storage device, the storage device may further disable the defense mechanism, so that the data stored in the storage device is normally accessible by the suspicious host. In the foregoing technical solution, the storage device disables the defense mechanism after generating the snapshot, so that it is ensured that the user data in the storage device is normally accessible by a normal user application in the normal host or the attacker host when it is ensured that the storage device can restore the user data in the storage device as completely as possible based on the snapshot.

In a possible implementation, that the storage device determines the suspicious IO sequence from the IO sequence may be specifically: determining, from the IO sequence, a first IO sequence used to access a first file, where the first data is the first file; and when determining that a degree of matching between the first IO sequence and a preset IO sequence is greater than a threshold, determining that the first IO sequence is the suspicious IO sequence, where the preset IO sequence is a pre-learned IO sequence that has a possibility of damaging the user data stored in the storage device. There may be one or more preset IO sequences. For example, the implementation is applicable to a network attached storage (network attached storage, NAS) architecture. In the foregoing technical solution, when it is determined that an IO sequence matches the preset IO sequence, it is determined that the IO sequence is the suspicious IO sequence, thereby helping improve efficiency and accuracy of determining the suspicious IO sequence.

In a possible implementation, each IO in the IO sequence carries access information, the access information includes an access address, and optionally, the access information further includes one or two of an access type and access time; and that the storage device determines the suspicious IO sequence from the IO sequence may be specifically: determining a statistical feature of the IO sequence based on the access information carried in each IO in the IO sequence; and determining the suspicious IO sequence from the IO sequence based on the statistical feature of the IO sequence, where user data at access addresses of IOs in the suspicious IO sequence forms the first data. For example, this implementation is applicable to a storage area network (storage area network, SAN) architecture. In the foregoing technical solution, the statistical feature of the IO sequence is determined based on the access information of each IO, and then the suspicious IO sequence is determined from the IO sequence based on the statistical feature of the IO sequence, thereby helping improve efficiency and accuracy of determining the suspicious IO sequence.

According to a second aspect, this application provides a data protection apparatus. The apparatus may be a storage device, or a protection module in the storage device; or the apparatus may be a protection device connected to the storage device.

The apparatus includes: an obtaining module, configured to obtain an IO sequence for accessing a storage device; a determining module, configured to determine a suspicious IO sequence from the IO sequence, where the suspicious IO sequence is initiated by a suspicious host when the suspicious host accesses first data in the storage device, the suspicious IO sequence indicates that the suspicious host has a possibility of damaging user data stored in the storage device, and the user data stored in the storage device includes the first data; and a generating module, configured to generate a defense mechanism and a snapshot in response to the determining module determining the suspicious IO sequence where the snapshot is used to restore the user data stored in the storage device, and the defense mechanism is used to prevent, before generating the snapshot is completed, the suspicious host from accessing the user data stored in the storage device. In a possible implementation, the defense mechanism is specifically used to prevent, before generating the snapshot is completed, the suspicious host from accessing second data, and the second data is user data other than the first data stored in the storage device.

In a possible implementation, the defense mechanism includes one or two of A and B: A: before generating the snapshot is completed, rejecting an access request of the suspicious host to the storage device; and B: adding preset data to the storage device, so that the suspicious host accesses the preset data before generating the snapshot is completed, where the preset data is not the user data.

In a possible implementation, after determining the suspicious IO sequence, the determining module is further configured to: determine whether the first data is damaged by the suspicious IO sequence; and when determining that the first data is damaged by the suspicious IO sequence, determine that the suspicious host is an attacker host; and/or when determining that the first data is not damaged by the suspicious IO sequence, determine that the suspicious host is a normal host. In a possible implementation, when determining whether the first data is damaged by the suspicious IO sequence, the determining module is specifically configured to: perform entropy value detection on the first data, to obtain an entropy value of the first data; and when the entropy value is greater than a preset value, determine that the first data is damaged by the suspicious IO sequence; or when the entropy value is less than or equal to the preset value, determine that the first data is not damaged by the suspicious IO sequence.

In a possible implementation, when performing entropy value detection on the first data to obtain the entropy value of the first data, the determining module is specifically configured to: perform sampling on the first data, to obtain sampled data; and performing entropy value detection on the sampled data, to obtain the entropy value of the first data.

In a possible implementation, after determining that the suspicious host is the attacker host, the determining module is further configured to display alarm information, where the alarm information is used by an administrator to determine whether to disconnect a connection between the attacker host and the storage device.

In a possible implementation, after completing generating the snapshot, the generating module is further configured to disable the defense mechanism, so that the data stored in the storage device is normally accessible by the suspicious host.

In a possible implementation, when determining the suspicious IO sequence from the IO sequence, the determining module is specifically configured to: determine, from the IO sequence, a first IO sequence used to access a first file, where the first data is the first file; and when determining that a degree of matching between the first IO sequence and a preset IO sequence is greater than a threshold, determine that the first IO sequence is the suspicious IO sequence, where the preset IO sequence is a pre-learned IO sequence that has a possibility of damaging the user data stored in the storage device.

In a possible implementation, each IO in the IO sequence carries access information, the access information includes an access address, and the access information further includes one or two of an access type and access time; and when determining the suspicious IO sequence from the IO sequence, the determining module is specifically configured to: determine a statistical feature of the IO sequence based on the access information carried in each IO in the IO sequence; and determine the suspicious IO sequence from the IO sequence based on the statistical feature of the IO sequence, where user data at access addresses of IOs in the suspicious IO sequence forms the first data.

According to a third aspect, this application provides a computer-readable storage medium. The computer-readable storage medium stores a computer program or instructions, and when the computer program or instructions are executed by a computing device, the method according to any one of the first aspect or the possible implementations of the first aspect is implemented.

According to a fourth aspect, this application provides a computer program product. The computer program product includes a computer program or instructions, and when the computer program or the instructions are executed by a computing device, the method according to any one of the first aspect or the possible implementations of the first aspect is implemented.

According to a fifth aspect, this application provides a computing device, including a processor. The processor is connected to a memory. The memory is configured to store a computer program. The processor is configured to execute the computer program stored in the memory, to cause the computing device to perform the method according to any one of the first aspect or the possible implementations of the first aspect.

According to a sixth aspect, this application provides a storage system, including a computing device and a storage medium. The computing device is connected to the storage medium, the storage medium is configured to store data, and the computing device is configured to perform the method according to any one of the first aspect or the possible implementations of the first aspect. For technical effects that can be achieved in any one of the second aspect to the sixth aspect, refer to descriptions of beneficial effects in the first aspect. Details are not described herein again.

### BRIEF DESCRIPTION OF DRAWINGS

FIG. 1 is a diagram of a possible NAS architecture;
FIG. 2 is a diagram of a possible SAN architecture;
FIG. 3 is a diagram of a structure of a data protection system according to this application;
FIG. 4 is a diagram of a structure of another data protection system according to this application;
FIG. 5 is a first schematic flowchart of a data protection method according to this application;
FIG. 6 is a second schematic flowchart of a data protection method according to this application;
FIG. 7 is a diagram of an application scenario according to this application;
FIG. 8 is a third schematic flowchart of a data protection method according to this application;
FIG. 9 is a diagram of another application scenario according to this application;
FIG. 10 is a diagram of a structure of a data protection apparatus according to this application; and
FIG. 11 is a diagram of a structure of another data protection apparatus according to this application.

### DESCRIPTION OF EMBODIMENTS

For ease of explaining embodiments of this application, terms and technologies in embodiments of this application are first explained.

Ransomware: encrypts files on attacked/infected hosts by using various encryption algorithms. The infected hosts can decrypt (crack) the files only by using private keys. For example, once entering a current device, ransomware files run automatically, and delete ransomware samples to evade scanning and analysis. Then, the ransomware is connected to hacker hosts by using local internet access permission, uploads local information, downloads a public key for encryption, and encrypts a file by using the public key.

Snapshot: is for capturing all data in a hard disk drive or volume at a specific time point with a very quick completing speed, like a camera shutter. The snapshot is used to avoid data contamination or logical corruption. For example, when widespread virus infection occurs, crashing occurs on configuration information, or a system breaks down, electronic data may be rolled back using the snapshot to start over from a time point of the snapshot, or a plurality of clones are created based on a data image at the time point.

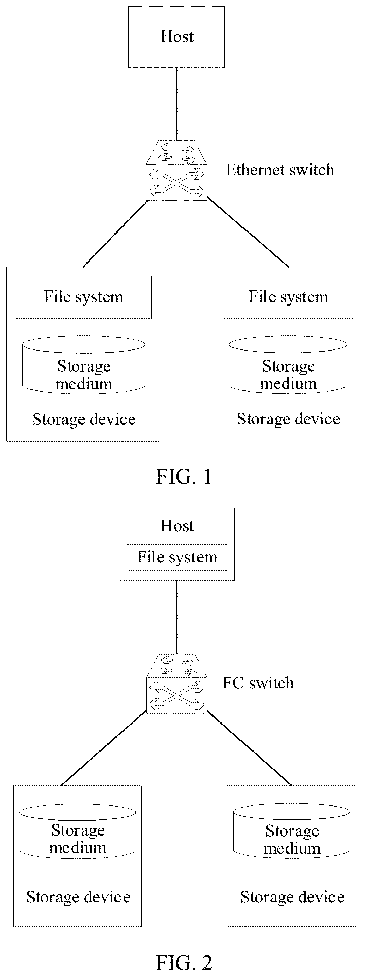

Network file system (network file system, NFS): is a distributed file system and a network protocol for file accessing and sharing between devices on a same local area network (local area network, LAN). The NFS is a low-cost network file sharing option that enables users and application programs to access, store, and update files on remote computers, just like using direct-attached storage. The NFS uses a remote procedure call protocol to route requests between a client and a server. Participating devices need to support the NFS, but do need to know details of the network. Network attached storage (network attached storage, NAS): literally speaking, is an apparatus that is connected to a network and has a data storage function. The NAS, defined as a special storage device for dedicated data, includes a storage medium (such as a disk array, a drive, and a removable storage medium) and embedded system software, and may provide cross-platform file sharing functions. The NAS generally occupies nodes on a local area network, and allows users to access data in the network without intervention of hosts. The NAS centrally manages and processes all data in the network and offloads loads from the hosts, thereby effectively reducing total costs of ownership. FIG. 1 is a diagram of a possible NAS architecture. The NAS architecture includes a host and storage devices. The host and the storage device are connected through an ethernet switch (ethernet switch). The ethernet switch supports, for example, an NFS protocol, a common internet file system (common internet file system, CIFS) protocol, a file transfer protocol (file transfer protocol, FTP), and a hypertext transfer protocol (hypertext transfer protocol, HTTP). The storage device includes a file system (file system) and a storage medium. The storage medium is configured to store data, and the file system is configured to manage the data stored in the storage medium.

Storage area network (storage area network, SAN): is block-based storage and uses a high-speed architecture to connect the host to the storage device. The storage device includes a logical disk unit (logical disk unit, LUN). The LUN is a series of blocks configured by using a shared storage pool. The host partitions and formats these blocks, generally using the file system, so that data can be stored on the LUN as if the data stored on a local disk. In the SAN architecture, the storage device, serving as an independent logical unit, can be accessed by the host or other storage devices. In addition, a plurality of storage devices may form a storage pool to provide larger storage space, a higher data throughput, and better manageability. FIG. 2 is a diagram of a possible SAN architecture. The SAN architecture includes a host and storage devices. The host and the storage device are connected through a fibre channel (fibre channel, FC) switch (FC switch). The storage device includes a storage medium. The storage medium is configured to store data, and the storage medium includes a plurality of LUNs. A file system is deployed in the host, to manage the data stored in the storage medium. The storage device may perform two actions: reading and writing according to commands from the host.

With reference to the foregoing terms and technical explanations, the following describes embodiments of this application in detail.

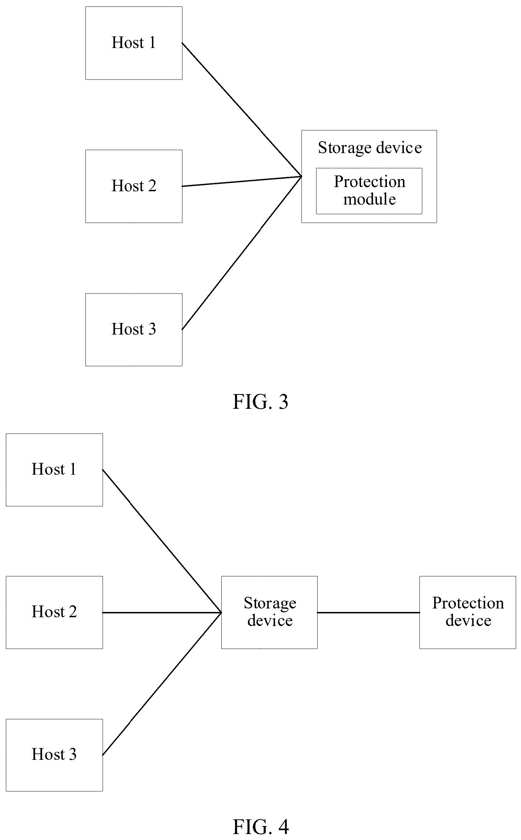

FIG. 3 shows a data protection system to which a data protection method is applicable according to an example of this application. The data protection system includes one or more hosts (where FIG. 3 shows an example of a host 1 to a host 3, but a quantity of hosts is not limited in this application), and a storage device.

Architecture between the one or more hosts and the storage device may be a NAS architecture, or may be a SAN architecture. One or more user applications run on each host. Each user application may access user data in the storage device through a host in which the user application is located, for example, write user data into the storage device, or read user data in the storage device.

The storage device may be a centralized storage device (or referred to as a centralized storage system), or may be a distributed storage device (or referred to as a distributed storage system). The centralized storage device includes one or more primary devices. The centralized storage device has a unified portal, and the portal is for the host to access the centralized storage device. The distributed storage device includes a plurality of independent storage nodes. The host may access each independent storage node, and each storage node has a processing and storage function. Further, the storage device includes a protection module, and the protection module may be configured to protect the user data in the storage device. Specifically, the protection module obtains an IO sequence used during access to the user data in the storage device by the host, and identifies one or more suspicious IO sequences from the IO sequence, to protect the user data. It may be understood that in the foregoing NAS architecture, the storage device not only includes the file system and the storage medium (not shown in FIG. 3), but also includes the protection module. In the foregoing SAN architecture, the storage device not only includes the storage medium (not shown in FIG. 3), but also includes the protection module. When the protection module is located in the storage device, the protection module may be located in a computing module of the storage device, for example, may be located on a controller of the storage device. For example, when the storage device is the distributed storage device, a controller of each independent storage node includes a protection module, where the protection module is configured to protect user data in the storage node in which the protection module is located; or the distributed storage device includes a protection module, where the protection module is configured to protect user data in the plurality of independent storage nodes. Alternatively, the distributed storage device includes a plurality of protection modules, and each protection module is configured to protect user data in one or more independent storage nodes in the distributed storage device. A correspondence between the protection module and the storage node may be set by an administrator.

FIG. 4 shows a data protection system to which another data protection method is applicable according to an example of this application. The data protection system includes one or more hosts (where FIG. 3 shows an example of a host 1 to a host 3, but a quantity of hosts is not limited in this application), a storage device, and protection device. The storage device may be a centralized storage device, or may be a distributed storage device.

For example, when the storage device is the distributed storage device, each independent storage node is connected to one protection device, and the protection device is configured to protect user data in the storage node connected to the protection device; or, the data protection system includes one protection device, a plurality of independent storage nodes are jointly connected to the protection device, and the protection device is configured to protect user data in the plurality of independent storage nodes. Alternatively, the data protection system includes a plurality of protection devices, and each protection device is configured to protect user data in one or more independent storage nodes in the distributed storage device. A correspondence between the protection device and the storage node may be set by an administrator.

It may be understood that the protection device in FIG. 4 is equivalent to the protection module in FIG. 3. A difference between the protection device and the protection module lies in that the storage device and the protection device in FIG. 4 are two independent devices, that is, the protection device may communicate with the storage device, to protect the user data in the storage device. Further, for implementation of accessing the user data in the storage device by the host and protecting the user data in the storage device by the protection device in FIG. 4, refer to descriptions in FIG. 3. Details are not described herein again.

When a storage device is attacked by a virus, to restore user data in the storage device as completely as possible, this application provides a data protection method. In the data protection method, when the storage device is accessed by a host, a protection module (or a protection device) in the storage device identifies whether an IO sequence initiated by the host is a suspicious IO sequence, and if determining that the IO sequence initiated by the host is the suspicious IO sequence, generates a defense mechanism and a snapshot, so that the host cannot continue to access the user data in the storage device in a time period from determining the suspicious IO sequence to generating the snapshot. The host may be referred to as a suspicious host. The suspicious host is a host that may be infected by a virus and subsequently initiate an attack on the storage device. The virus is used to damage the user data in the storage device. The virus may be specifically ransomware. In other words, when accessing user data in the storage device, the suspicious host has a possibility of damaging the user data. It may be understood that a time point at which the snapshot is generated is a time point at which the suspicious IO sequence is found. Assuming that the suspicious host is an attacker host, a degree of damage caused by the attacker host to the user data at the time point is low. In this way, the storage device can restore the user data in the storage device as completely as possible based on the snapshot.

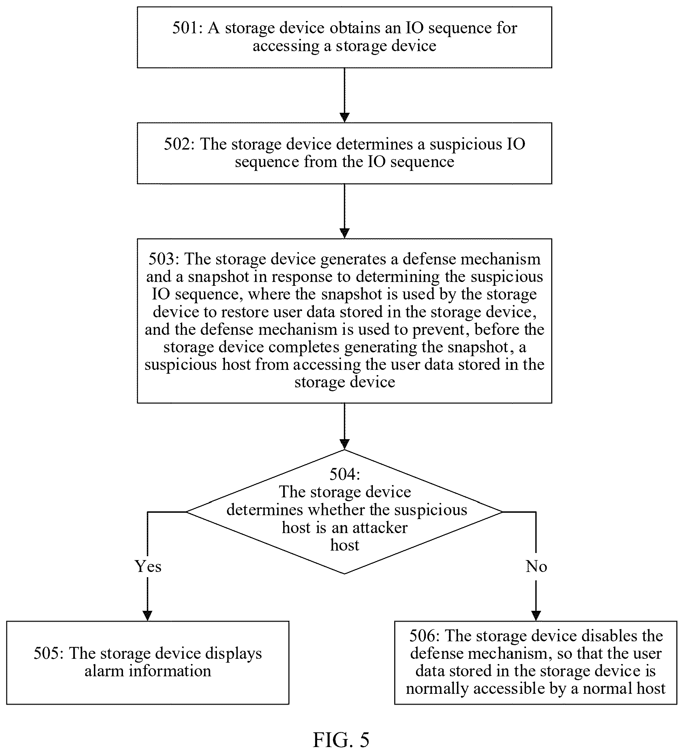

FIG. 5 is a schematic flowchart of a first data protection method according to an example of this application. The flowchart is applicable to the data protection system shown in FIG. 3. The data protection method may be performed by a storage device. Specifically, the data protection method may be performed by a protection module in the storage device.

Step 501: The storage device obtains an IO sequence for accessing the storage device.

In a first possible manner, when accessing the storage device, a host may send an access request to the storage device, and an access request may be considered as an IO. Correspondingly, the storage device performs a corresponding action based on the IO, and records the IO in a log. It may be understood that one or more IOs from the host are recorded in the log. Further, the storage device may periodically obtain an IO sequence in first preset duration from the log. The IO sequence includes a plurality of IOs, and the plurality of IOs may be initiated by one or more hosts accessing the storage device. For example, the storage device obtains, from the log at an interval of 3 minutes, an IO sequence from a current moment to 5 minutes before the current moment, that is, the first preset duration is 5 minutes. The storage device may obtain, from the log at a 10^{th} minute, an IO sequence in a time period from a 6^{th} minute to the 10^{th} minute, and obtain, from the log at a 13^{th} minute, an IO sequence in a time period from a 9^{th} minute to the 13^{th} minute.

In a second possible manner, when accessing the storage device, the host may send an access request to the storage device, where the access request is considered as an IO. Correspondingly, the storage device may capture an IO from the host in real time, and further obtains a plurality of IOs (that is, an IO sequence) in the first preset duration. For example, the storage device obtains, at an interval of 3 minutes, an IO sequence from a current moment to 5 minutes after the current moment, that is, the first preset duration is 5 minutes. Further, the storage device may obtain, starting at a 6^{th} minute, an IO sequence in a time period from the 6^{th} minute to a 10^{th} minute, and obtain, starting at a 9^{th} minute, an IO sequence in a time period from the 9^{th} minute to a 13^{th} minute. In comparison with the first possible manner, in the second possible manner, the IO obtained by the storage device is an IO sent by the host in real time. In this case, the storage device can find a suspicious IO sequence in a timelier manner (refer to descriptions in the following step 502), and further protect user data in the storage device in a timely manner. This helps restore the user data in the storage device as completely as possible.

For example, the IO sequence may include one or more of the following: an IO used to write user data into a storage medium of the storage device (which may be referred to as a write IO for short), an IO used to read user data from the storage medium of the storage device (which may be referred to as a read IO for short), an IO used to delete user data (which may be referred to as a delete IO for short), an IO used to rename a user file in the storage medium of the storage device (which may be referred to as a rename IO for short), and the like.

Step 502: The storage device determines a suspicious IO sequence from the IO sequence.

The suspicious IO sequence has a possibility of damaging first data. In other words, a suspicious host that initiates the suspicious IO sequence has a possibility of damaging the user data stored in the storage device.

Based on a different architecture in FIG. 1 or FIG. 2, the storage device determines the suspicious IO sequence in a different manner.

In the NAS architecture:
Each IO may be used to access a user file. For example, each IO carries access information of the IO. The access information may include one or more of index information, an access type, and access time for accessing the user file by using the IO. The index information may be specifically a file path, a file name, or the like. The access type may indicate that the IO is a write IO, a read IO, a delete IO, a rename IO, or the like. Further, the storage device first determines, from the IO sequence in the first preset duration based on the index information carried in each IO, a plurality of IOs used to access a same user file, forms a first IO sequence by using the plurality of IOs, then matches the first IO sequence with a preset IO sequence, and determines a degree of matching between the first IO sequence and the preset IO sequence.

The preset IO sequence is an IO sequence that is pre-learned by the storage device and that has a possibility of damaging the user data stored in the storage device. There may be one or more preset IO sequences. For example, a preset IO sequence sequentially includes a read IO, a write IO, a delete IO, and a rename IO. To be specific, when a host sequentially performs a read action, a write action, a delete action, and a rename action on a user file, it indicates that the host may first read the user file (that is, an unencrypted user file) from the storage device, encrypt the read unencrypted user file to obtain an encrypted user file, then write the encrypted user file into the storage device, delete the unencrypted user file from the storage device, and rename the encrypted user file.

If determining that a degree of matching between the first IO sequence and a preset IO sequence is greater than a threshold, the storage device determines that the first IO sequence is the suspicious IO sequence, in other words, the first IO sequence has a possibility of damaging the user file accessed by using the first IO sequence. If determining that a degree of matching between the first IO sequence and each preset IO sequence is less than or equal to the threshold, the storage device determines that the IO sequence is not the suspicious IO sequence, in other words, the first IO sequence has no possibility of damaging the user file accessed by using the first IO sequence. It is clear that, alternatively, if determining that a degree of matching between the first IO sequence and a preset IO sequence is greater than or equal to the threshold, the storage device determines that the first IO sequence is the suspicious IO sequence; and if determining that a degree of matching between the first IO sequence and each preset IO sequence is less than the threshold, the storage device determines that the first IO sequence is not the suspicious IO sequence. The threshold may be manually set by an administrator, and the threshold is, for example, 80%.

For example, there is one preset IO sequence, and the preset IO sequence sequentially includes a read IO, a write IO, a delete IO, and a rename IO. The IO sequence in the first preset duration is shown in Table 1. For a file name 1, the storage device may extract a first IO sequence, to be specific, an IO 2, an IO 3, an IO 6 and an IO 8, from the IO sequence. The storage device determines that the IO 2, the IO 3, the IO 6 and the IO 8 are sequentially a read IO, a write IO, a delete IO, and a rename IO, that is, determines that a degree of matching between the extracted first IO sequence and the preset IO sequence is 100%, and therefore determines that the IO sequence is the suspicious IO sequence. For a file name 2, the storage device may extract a first IO sequence, to be specific, an IO 1, an IO 4, an IO 5 and an IO 7, from the IO sequence. The storage device determines that the IO 1, the IO 4, the IO 5 and the IO 7 are sequentially a read IO, a read IO, a write IO, and a rename IO, that is, determines that a degree of matching between the extracted first IO sequence and the preset IO sequence is 25%, and therefore determines that the IO sequence is not the suspicious IO sequence.

**Table 1**

| IO sequence | File name |
|---|---|
| IO 1 | File name 2 |
| IO 2 | File name 1 |
| IO 3 | File name 1 |
| IO 4 | File name 2 |
| IO 5 | File name 2 |
| IO 6 | File name 1 |
| IO 7 | File name 2 |
| IO 8 | File name 1 |
| IO 9 | File name 3 |
| IO 10 | File name 4 |

In this application, the user file accessed by using the first IO sequence may be referred to as first data or a first file.

In the SAN architecture:
Each IO may be used to access an address (that is, an access address) in the storage device.

For example, each IO carries access information of the IO, and the access information may include one or more of an access address, an access type, and access time for accessing by using the IO. The access address is, for example, a logical block address (logical block address, LBA), and the access type may indicate that the IO is a write IO, a read IO, a delete IO, a rename IO, or the like. In a possible implementation, the storage device first determines, from the IO sequence in the first preset duration based on the access address carried in each IO, a plurality of IOs used to access a same access address, forms a first IO sequence by using the plurality of IOs, then matches the first IO sequence with a preset IO sequence, and obtains a degree of matching between the first IO sequence and the preset IO sequence. There may be one or more preset IO sequences. Further, if determining that a degree of matching between the first IO sequence and a preset IO sequence is greater than a threshold, the storage device determines that the IO sequence is the suspicious IO sequence, in other words, the IO sequence has a possibility of damaging user data in the address accessed by using the IO sequence. If determining that a degree of matching between the IO sequence and each preset IO sequence is less than or equal to the threshold, the storage device determines that the IO sequence is not the suspicious IO sequence, in other words, the IO sequence has no possibility of damaging the user data in the address accessed by using the IO sequence. For details of this possible implementation, refer to the descriptions in the foregoing NAS architecture. In another possible implementation, the storage device determines a statistical feature in the first preset duration based on the access information of each IO in the IO sequence in the first preset duration, where the statistical feature includes a statistical feature in a time dimension and a statistical feature in a space dimension. For example, a feature extraction model is pre-stored in the storage device, and the feature extraction model is used to determine the statistical feature in the first preset duration based on the access information of each IO in the IO sequence. Then, the storage device determines a plurality of target IOs from the IO sequence based on the statistical feature in the first preset duration, to form the suspicious IO sequence. For example, a detection model is pre-stored in the storage device. The detection model may extract the plurality of target IOs from the IO sequence based on the statistical feature, to form the suspicious IO sequence. The storage device may input the IO sequence and the statistical feature into the detection model, to obtain the suspicious IO sequence output by the detection model.

In this application, a data block is stored in an access address accessed by using each target IO. For ease of description, user data including data blocks corresponding to the target IOs may be referred to as first data, and access addresses carried in the target IOs may be referred to as index information of the first data.

Step 503: The storage device generates a defense mechanism and a snapshot in response to determining the suspicious IO sequence.

The snapshot is used by the storage device to restore the user data stored in the storage device, and the defense mechanism is used to prevent, before the storage device completes generating the snapshot, the suspicious host from accessing the user data stored in the storage device.

In a possible implementation, the defense mechanism is specifically used to prevent, before the storage device completes generating the snapshot, the suspicious host from accessing second data, and the second data is user data other than the first data stored in the storage device.

In response to determining the suspicious IO sequence, the storage device first generates the defense mechanism, and then generates the snapshot after generating the defense mechanism.

Alternatively, the storage device synchronously generates the defense mechanism and the snapshot in response to determining the suspicious IO sequence.

The following first describes the defense mechanism generated by the storage device.

Defense mechanism 1: When receiving an access request for the second data and from the suspicious host, the storage device rejects the access request in second preset duration after the suspicious IO sequence is determined.

Defense mechanism 2: When receiving an access request for the second data and from the suspicious host, the storage device waits for second preset duration and then performs an operation corresponding to the access request. The access request includes index information of the second data. For example, in the NAS architecture, the access request includes a file name or a storage path of the second data (or referred to as a second file); and in the SAN architecture, the access request includes an access address of the second data. For example, in the NAS architecture, an access request is a read IO, and the access request includes the file name of second data. After receiving the access request, the storage device may wait for second preset duration, then determine the second data based on the file name of the second data, and send an access response to the suspicious host, where the access response includes the second data.

Further, the second preset duration may be input by the administrator into the storage device, or may be determined by the storage device based on duration required for generating the snapshot by the storage device. For example, the second preset duration is greater than or equal to the duration required for generating the snapshot by the storage device. For example, when receiving the access request from the suspicious host, the storage device starts a timer in the storage device. Timing duration of the timer is the second preset duration. When the timer expires, the storage device sends the access response corresponding to the access request to the suspicious host. For another example, when receiving the access request from the suspicious host, the storage device starts a timing counter in the storage device. When timing of the timing counter reaches the second preset duration, the storage device sends the access response corresponding to the access request to the suspicious host.

In addition, in the NAS architecture, the storage device sequentially stores a plurality of user files. Correspondingly, in a possible manner, the suspicious host sequentially reads the plurality of user files. In view of this, this application further provides a defense mechanism 3: After determining the suspicious IO sequence, the storage device may create, according to a storage order of the plurality of user files and an access order of accessing the user files by the suspicious host, a preset file (namely, preset data, or referred to as a bait file) before or after a next user file that the suspicious host wants to access (that is, a second file), so that the suspicious host first accesses the preset file, and then continues to access the second file. Specifically, when the access sequence is sequential, the storage device creates the preset file before the second file; or when the access order is reverse, the storage device creates the preset file after the second file. There may be one or more preset files. In this way, it is ensured that the suspicious host cannot continue to access the second file in the second preset duration, thereby protecting the second file by using the preset file. It may be understood that, assuming that the suspicious host is an attacker host, only the preset file is damaged. The preset file is not the user file, and it does not matter even if the preset file is damaged. For example, the storage device sequentially stores a user file 1 to a user file 5, and the suspicious host performs access in sequential order (to be specific, sequentially accesses the user file 1 to the user file 5). Further, when the suspicious host accesses the user file 1, the storage device generates a defense mechanism for the suspicious host, that is, creates a preset file before the user file 2. Correspondingly, the suspicious host accesses the user file 2 to the user file 5 only after completing accessing the preset file in the storage device. In this way, the user file 2 to the user file 5 can be effectively protected. In addition, the suspicious host may further perform access in reverse order (to be specific, sequentially access the user file 5 to the user file 1). When the suspicious host accesses the user file 5, the storage device generates a defense mechanism for the suspicious host, that is, generates a preset file after the user file 4. Correspondingly, the suspicious host accesses the user file 4 to the user file 1 only after completing accessing the preset file in the storage device. In this way, the user file 4 to the user file 1 can be effectively protected.

Further, in the NAS architecture, the storage device may select one of the defense mechanism 1 to the defense mechanism 3, or may combine the defense mechanism 2 and the defense mechanism 3 for use. This is not limited in this application.

It should be added that, in the NAS architecture, the preset file may not only be used as a defense mechanism, but also be used by the storage device to identify a suspicious IO sequence. For example, the storage device creates the preset file before the user file, and when the suspicious host accesses the user file in the storage device in sequential order, the suspicious host first accesses the preset file in the storage device. For another example, the storage device creates the preset file after the user file, and when the suspicious host accesses the user file in the storage device in reverse order, the suspicious host first accesses the preset file in the storage device. Further, the storage device identifies the suspicious host, or identifies the suspicious IO sequence initiated by the suspicious host, and then generates the defense mechanism. In this case, the suspicious host accesses only the preset file in the storage device, but does not access the user file.

This helps further ensure integrity of the user file.

Further, that the storage device generates the snapshot may be specifically generating a snapshot of the second data, generating a snapshot of a storage directory of the second data, or generating a snapshot of all user data in the storage device. The duration required generating the snapshot by the storage device is less than or equal to the second preset duration. That is, after the second preset duration, even if the suspicious host continues to access the second data and the second data is damaged by the suspicious host, the storage device may restore the second data based on the generated snapshot.

It should be added that, in step 502, it is assumed that the storage device identifies the suspicious IO sequence before the first data in the storage device is to be accessed by using the suspicious IO sequence. In this case, the defense mechanism generated by the storage device may be further used to prevent the suspicious host from accessing the first data before the storage device completes generating the snapshot. This further helps ensure integrity of the first data in the storage device. For specific implementation, refer to the foregoing descriptions of protecting the second data by the storage device, and the "second data" may be replaced with the "first data" for understanding. It may be understood that, in step 502, the storage device only identifies the suspicious IO sequence, in other words, identifies the suspicious host that may damage the user data stored in the storage device. However, actually, the suspicious host may be a host configured to damage the user data stored in the storage device, that is, the suspicious host is the attacker host; or the suspicious host may not be the host configured to damage the user data stored in the storage device, that is, the suspicious host is a normal host.

Therefore, the storage device further needs to perform the following step 504.

Step 504: The storage device determines whether the suspicious host is the attacker host.

Specifically, when determining that the first data is damaged by the suspicious IO sequence, the storage device determines that the suspicious IO sequence is an IO sequence that damages the first data, and/or determines that the suspicious host is the attacker host. Further, the storage device may perform the following step 505. When determining that the first data is not damaged by the suspicious IO sequence, the storage device determines that the suspicious IO sequence is not an IO sequence used to damage the first data, and/or determines that the suspicious host is not the attacker host, in other words, determines that the suspicious host is the normal host. Further, the storage device may perform the following step 506.

The storage device may specifically determine whether the first data is damaged by the suspicious IO sequence in the following two manners.

### Manner 1:

The storage device obtains the index information of the first data from the suspicious IO sequence, and then obtains the first data from the storage device based on the index information of the first data. In the NAS architecture, the index information of the first data may be a file path or a file name. The storage device may extract the file path or the file name of the first data from the suspicious IO sequence, and then read the first data from the storage medium of the storage device based on the file path or the file name of the first data. In the SAN architecture, the suspicious IO sequence includes the plurality of target IOs, and the first data includes the data blocks in the access addresses carried in the target IOs. The storage device may read, from the storage medium of the storage device based on the access addresses (that is, the index information of the first data) carried in the target IOs, the data blocks in the access addresses, to form the first data.

After obtaining the first data from the storage device, the storage device may perform content detection on the first data to obtain a detection result, and then determine, based on the detection result, whether the first data is damaged by the suspicious IO sequence.

Content detection is, for example, entropy value detection. Specifically, the storage device calculates an entropy value of the first data, and if the obtained entropy value is greater than a preset value, the storage device determines that the first data is damaged by the suspicious IO sequence; or if the obtained entropy value is less than or equal to the preset value, the storage device determines that the first data is not damaged by the suspicious IO sequence. Alternatively, the storage device calculates the entropy value of the first data, and if the obtained entropy value is greater than or equal to the preset value, the storage device determines that the first data is damaged by the suspicious IO sequence; or if the obtained entropy value is less than the preset value, the storage device determines that the first data is not damaged by the suspicious IO sequence. It is explained as that the entropy value of the first data may indicate randomness of the first data. Higher randomness indicates a higher entropy value. When the first data is damaged by the suspicious IO sequence, the randomness corresponding to the first data greatly increases, that is, the entropy value greatly increases.

### Manner 2:

Considering a large data amount of the first data, the storage device may first perform sampling on the first data to obtain sampled data. Then, the storage device performs content detection on the sampled data to obtain a detection result, and then determines, based on the detection result, whether the sampled data is damaged by the suspicious IO sequence. The content detection is, for example, entropy value detection (for specific implementation, refer to the descriptions in Manner 1). Further, when determining that the sampled data is damaged by the suspicious IO sequence, the storage device determines that the first data is damaged by the suspicious IO sequence; or when determining that the sampled data is not damaged by the suspicious IO sequence, the storage device determines that the first data is not damaged by the suspicious IO sequence.

In a specific implementation, the storage device obtains a plurality of segments of data from the first data through sampling, where lengths of the plurality of segments of data are the same or different. Then, the storage device performs a splicing operation on the plurality of segments of data, performs content detection on a result obtained through the splicing operation, and then determines, based on an obtained detection result, whether the first data is damaged by the suspicious IO sequence; or the storage device separately performs content detection on the plurality of segments of data, and then determines, based on obtained detection results respectively corresponding to the plurality of segments of data, whether the first data is damaged by the suspicious IO sequence.

For example, the plurality of segments of data include front-segment data, middle-segment data, and rear-segment data in the first data, and the front-segment data, the middle-segment data, and the rear-segment data are all of preset data lengths. For another example, when the storage device separately performs entropy value detection on the plurality of segments of data, if any one of entropy values respectively corresponding to the plurality of segments of data is greater than a preset value, the storage device determines that the first data is damaged by the suspicious IO sequence; or if the entropy values respectively corresponding to the plurality of segments of data are all less than or equal to the preset value, the storage device determines that the first data is not damaged by the suspicious IO sequence.

In addition, the storage device may further directly perform sampling on the first data from the storage medium of the storage device based on the index information of the first data, to perform content detection on a sampling result.

In this way, when the storage device performs content detection on the first data, it is beneficial to reduce a calculation amount.

In this application, a sequence of step 504 and step 503 is not limited. It may be understood that after determining the suspicious IO sequence, the storage device generates the defense mechanism and determines whether the suspicious host is the attacker host.

Step 505: The storage device displays alarm information.

The alarm information may present at least one or more of the following information to the administrator: an identifier of the attacker host, the index information of the first data, the index information of the second data, an identifier of a user application that is running on the attacker host, and virus information. Optionally, the storage device may display the alarm information on a display interface of the storage device.

When the administrator sees the alarm information, the administrator can choose whether to disconnect a connection between the attacker host and the storage device and send a corresponding indication to the storage device. In an example, the administrator sends a disconnection indication to the storage device, and correspondingly, the storage device disconnects a connection between the attacker host and the storage device based on the disconnection indication from the administrator. In another example, the administrator sends a connection maintaining indication to the storage device, and correspondingly, the storage device maintains a connection between the attacker host and the storage device based on the connection maintaining indication from the administrator.

It is clear that, in this application, when determining that the suspicious host is the attacker host, the storage device may alternatively disconnect the connection between the attacker host and the storage device automatically, to reserve the user data in the storage device to a maximum extent. In addition, the storage device may alternatively not determine whether the suspicious host is the attacker host, but directly display the alarm information to the administrator. The alarm information may present one or more of the following information to the administrator: an identifier of the suspicious host, the index information of the first data, the index information of the second data, an identifier of a user application that is running on the suspicious host, and the like. Then, the administrator determines whether to disconnect the connection between the suspicious host and the storage device. For specific implementation, refer to the foregoing descriptions.

Optionally, the administrator may further send a restoration instruction to the storage device, and in response to the restoration instruction, the storage device restores, based on the snapshot, the user data stored in the storage device. Alternatively, after third preset duration after generating of the snapshot, the storage device automatically restores, based on the snapshot, the user data stored in the storage device.

Step 506: The storage device disables the defense mechanism, so that the user data stored in the storage device is normally accessible by the normal host.

Disabling the defense mechanism means that when receiving an access request from the normal host and for the data stored in the storage device, the storage device no longer rejects the access request; or when receiving an access request from the normal host and for the data stored in the storage device, the storage device does not perform delay processing (for example, a timer or a timing counter), but directly performs an operation corresponding to the access request, or the storage device deletes the preset file in the storage device.

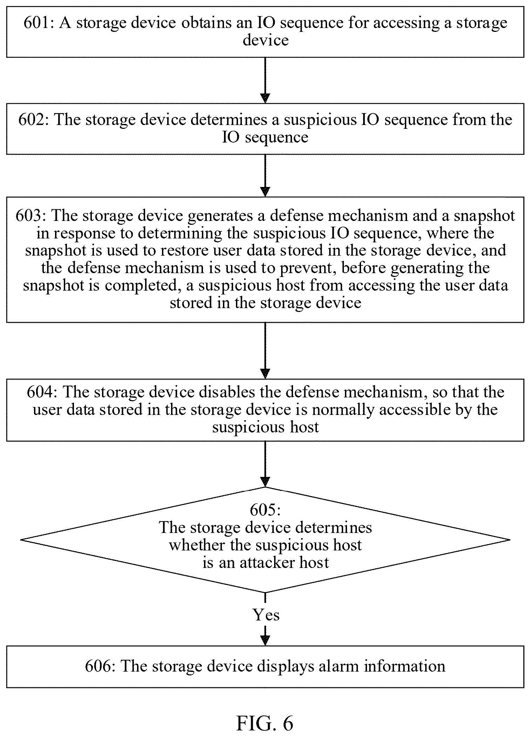

FIG. 6 is a second schematic flowchart of a data protection method according to an example of this application. A difference between the flowchart and FIG. 5 lies in that a defense mechanism is disabled after a storage device generates a snapshot.

Step 601: The storage device obtains an IO sequence for accessing the storage device. For specific implementation, refer to the descriptions in step 501.

Step 602: The storage device determines a suspicious IO sequence from the IO sequence. For specific implementation, refer to the descriptions in step 502.

Step 603: The storage device generates a defense mechanism and a snapshot in response to determining the suspicious IO sequence. The snapshot is used to restore user data stored in the storage device, and the defense mechanism is used to prevent, before generating the snapshot is completed, a suspicious host from accessing the user data stored in the storage device. For specific implementation, refer to the descriptions in step 503.

Step 604: The storage device disables the defense mechanism, so that the user data stored in the storage device is normally accessible by the suspicious host. For specific implementation, refer to the descriptions in step 506.

In this embodiment, after generating the snapshot, the storage device may disable the defense mechanism (without a need to determine that the suspicious host is not an attacker host). Correspondingly, the user data stored in the storage device continues to be normally accessible by the suspicious host. In this way, when the suspicious host is a normal host, the normal host restores access to the user data stored in the storage device as soon as possible.

In addition, a plurality of user applications may further run on the suspicious host. The plurality of user applications include a virus-laden application installed by a hacker on the suspicious host and a normal user application. After generating the snapshot, the storage device disables the defense mechanism, so that it is ensured that the storage device is normally accessible by the normal user application.

For example, a user application 1 to a user application 5 may run on the suspicious host. The user application 1 is a virus-laden application installed by the hacker on the suspicious host. That is, when accessing user data 1 in the storage device, the user application 1 may damage the user data 1. The user application 2 to the user application 4 are normal applications. That is, access to user data 2 to user data 4 in the storage device by the user application 2 to the user application 4 respectively is normal access (where the user data 2 to the user data 4 are not damaged). In this case, the storage device disables the defense mechanism immediately after generating the snapshot to help ensure that user data respectively required by the user application 2 to the user application 4 is normally accessible by the user application 2 to the user application 4 running on the suspicious host. In addition, even if the user application 1 (the suspicious host) further damages other user data (for example, user data 6) after the defense mechanism is disabled, the storage device may also restore the user data 6 based on the generated snapshot.

Step 605: The storage device determines whether the suspicious host is an attacker host. For specific implementation, refer to the descriptions in step 504. Further, when determining that the suspicious host is the attacker host, the storage device continues to perform step 606.

Step 606: The storage device displays alarm information. For specific implementation, refer to the descriptions in step 505.

Based on the flowcharts shown in FIG. 5 and FIG. 6, FIG. 7 is a diagram of an application scenario according to an example of this application. The scenario includes a host 1 to a host 3, and a storage device. Further, the storage device can execute a service IO process, an IO monitoring process, a ransomware detection process, and a defense process. The processes are described as follows: In the service IO process, the storage device receives an IO from any one of the host 1 to the host 3, and performs a corresponding operation based on the IO. For example, the storage device receives a read IO from the host 1, and the storage device obtains, from a storage medium based on index information in the read IO, user data corresponding to the index information, and returns the user data to the host 1. For another example, the storage device receives a write IO from the host 2, and the storage device stores user data in the write IO in the storage medium.

In the IO monitoring process, the storage device identifies a suspicious IO sequence from an IO sequence, and determines, from the host 1 to the host 3, a suspicious host that starts the suspicious IO sequence. For specific implementation, refer to the descriptions in step 501 and step 502.

In the ransomware detection process, the storage device obtains, from the storage medium based on index information in the suspicious IO sequence, first data accessed by using the suspicious IO sequence, performs content detection on the first data, and determines, based on a result of the content detection, that the suspicious host is an attacker host. For specific implementation, refer to the descriptions in step 504.

In the defense process, after identifying the suspicious IO sequence, the storage device generates a defense mechanism and a snapshot. For specific implementation, refer to descriptions in step 503 and step 603. The storage device further disables the defense mechanism. For specific implementation, refer to the descriptions in step 506 or the descriptions in step 604 separately. In addition, after determining that the suspicious host is the attacker host, the storage device further outputs alarm information, and after receiving a disconnection indication from an administrator, disconnects a connection between the attacker host and the storage device. For details, refer to the descriptions in step 505 and step 606. For example, if the attacker host is the host 1, the storage device disconnects a connection between the host 1 and the storage device.

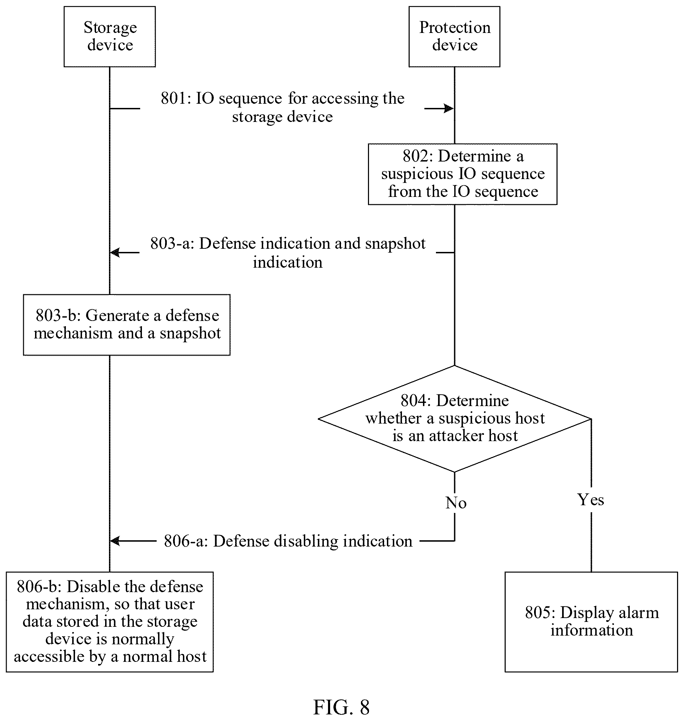

FIG. 8 is a third schematic flowchart of a data protection method according to an example of this application. The flowchart is applicable to the data protection system shown in FIG. 4, and the data protection method may be performed by a protection device.

Step 801: The protection device obtains an IO sequence for accessing a storage device.

In an example, each time the storage device receives an IO, the storage device forwards the IO to the protection device. Correspondingly, the protection device may obtain an IO sequence in first preset duration. In still another example, the storage device records an IO from a host in a log, and the protection device reads the log in the storage device, to obtain an IO sequence in first preset duration.

For content that is not described in detail in step 801, refer to the descriptions in step 501.

Step 802: The protection device determines a suspicious IO sequence from the IO sequence. For content that is not described in detail in step 802, refer to the descriptions in step 502, and the "storage device" may be replaced with the "protection device" for understanding.

Step 803-a: The protection device sends a defense indication and a snapshot indication to the storage device in response to the determined suspicious IO sequence. The defense indication indicates the storage device to generate a defense mechanism, and the snapshot indication indicates the storage device to generate a snapshot used to restore user data stored in the storage device. Correspondingly, the storage device receives the defense indication and the snapshot indication from the protection device.

Step 803-b: The storage device generates the defense mechanism and the snapshot.

The defense indication may be a first defense indication, and the first defense indication indicates the storage device to reject an access request after the storage device receives the access request from a suspicious host.

The defense indication may be a second defense indication, and the second defense indication indicates the storage device to allow a suspicious host to access the user data stored in the storage device after a delay of second preset duration.

In an example, the protection device determines the second preset duration, and includes the second preset duration to the second defense indication, to send the second defense indication to the storage device. The second preset duration may be input by an administrator to the protection device. Alternatively, the second preset duration may be determined by the protection device based on duration required for generating the snapshot by the storage device. For example, the second preset duration is greater than or equal to the duration required for generating the snapshot by the storage device. For another example, the protection device sends, to the storage device, a request for requesting the duration required for generating the snapshot. Correspondingly, the storage device sends, to the protection device, the duration required for generating the snapshot by the storage device. In still another example, after receiving the second defense indication from the protection device, the storage device automatically determines the second preset duration. For example, the second preset duration is determined by the storage device based on duration required for generating the snapshot by the storage device. For example, the second preset duration is greater than or equal to the duration required for generating the snapshot by the storage device.

In addition, in a NAS architecture, the defense indication may be a third defense indication, and the third defense indication indicates the storage device to create, according to a storage order of a plurality of user files and an access order of accessing the user files by the suspicious host, a preset file before or after a next user file (for example, a second file) that the suspicious host wants to access, so that the suspicious host first accesses the preset file, and then continues to access the second file. Alternatively, the protection device may further obtain, from the storage device, a storage order of a plurality of user files in the storage device and an access order of accessing the user files by the suspicious host, to create a preset file according to the storage order and the access order, determine a placement location of the preset file, and include the preset file and the placement location to the third defense indication, to send the third defense indication to the storage device. Correspondingly, the storage device places the preset file at a location corresponding to the placement location (for example, before or after the second file) based on the third defense indication.

Optionally, after generating the snapshot, the storage device sends a snapshot complete indication to the protection device to notify the protection device that the current snapshot is completed. Alternatively, after fourth preset duration after sending of the snapshot indication to the storage device, the protection device determines that the current snapshot of the storage device is generated. The fourth preset duration is greater than or equal to the duration required for generating the snapshot by the storage device.

For content that is not described in detail in step 803-a and step 803-b, refer to the descriptions in step 503.

Step 804: The protection device determines whether the suspicious host is an attacker host.

In a possible manner, the protection device obtains index information of first data from the suspicious IO sequence, and obtains the first data from the storage device based on the index information. Further, the protection device performs content detection on the first data to obtain a detection result, and determines, based on the detection result, whether the first data is damaged by the suspicious IO sequence.

In still another possible manner, considering a large amount of the first data, after obtaining the first data from the storage device, the protection device may further first perform sampling on the first data to obtain sampled data. Then, the protection device performs content detection on the sampled data to obtain a detection result, and determines, based on the detection result, whether the sampled data is damaged by the suspicious IO sequence. In addition, the protection device may further directly perform sampling on the first data from a storage medium of the storage device based on the index information of the first data, to perform content detection on a sampling result. Further, when determining that the first data is damaged by the suspicious IO sequence, the protection device may determine that the suspicious IO sequence is an IO sequence that damages the first data, and/or determine that the suspicious host is an attacker host. Further, the protection device may perform step 805. When determining that the first data is not damaged by the suspicious IO sequence, the protection device may determine that the suspicious IO sequence is not an IO sequence used to damage the first data, and/or determine that the suspicious host is a normal host. Further, the protection device may perform step 806 (including step 806-a and step 806-b).

In this application, a sequence of step 804 and step 803 (including step 803-a and step 803-b) is not limited. It may be understood that after determining the suspicious IO sequence, the protection device may indicate the storage device to generate the defense mechanism and the snapshot, and determine whether the suspicious host is the attacker host.

For content that is not described in detail in step 804, refer to the descriptions in step 504.

Step 805: The protection device displays alarm information. For content that is not described in detail in step 805, refer to the descriptions in step 505, and the "storage device" may be replaced with the "protection device" for understanding.

Optionally, after determining that the suspicious host is the attacker host, the protection device may further indicate the storage device to display the alarm information to the administrator. For example, the protection device sends the alarm information to the storage device, and then the storage device displays the alarm information to the administrator on a display interface. Optionally, the administrator may further send a first restoration instruction to the protection device, and the protection device sends a second restoration instruction to the storage device in response to the first restoration instruction. Correspondingly, in response to the second restoration instruction, the storage device restores, based on the snapshot, the user data stored in the storage device. Alternatively, after third preset duration after generating of the snapshot, the storage device automatically restores, based on the snapshot, the user data stored in the storage device. Alternatively, after fifth preset duration for determining that the storage device has generated the snapshot, the protection device sends the second restoration instruction to the storage device. Correspondingly, in response to the second restoration instruction, the storage device restores, based on the snapshot, the user data stored in the storage device.

Step 806-a: The protection device sends a defense disabling indication to the storage device, where the defense disabling indication indicates the storage device to disable the defense mechanism. Correspondingly, the storage device receives the defense disabling indication from the protection device.

Step 806-b: The storage device disables the defense mechanism, so that the user data stored in the storage device is normally accessible by the normal host.

For content that is not described in detail in step 806-a and step 806-b, refer to the descriptions in step 506.

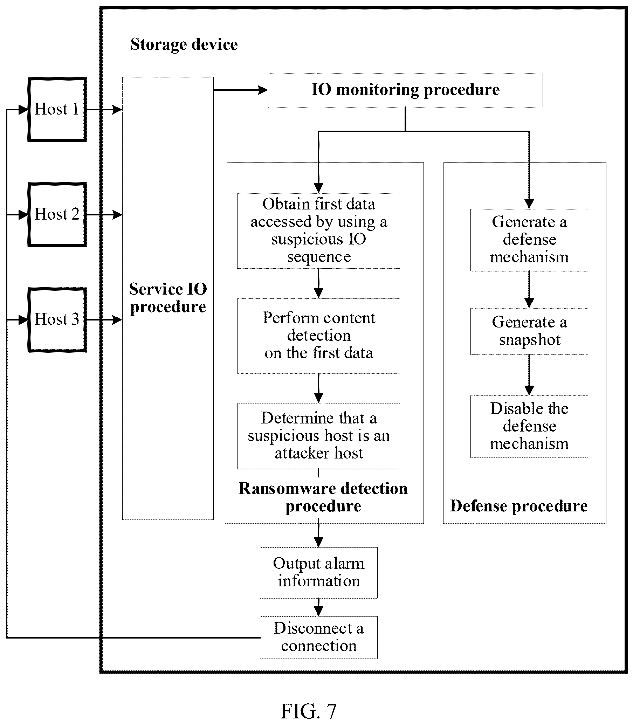

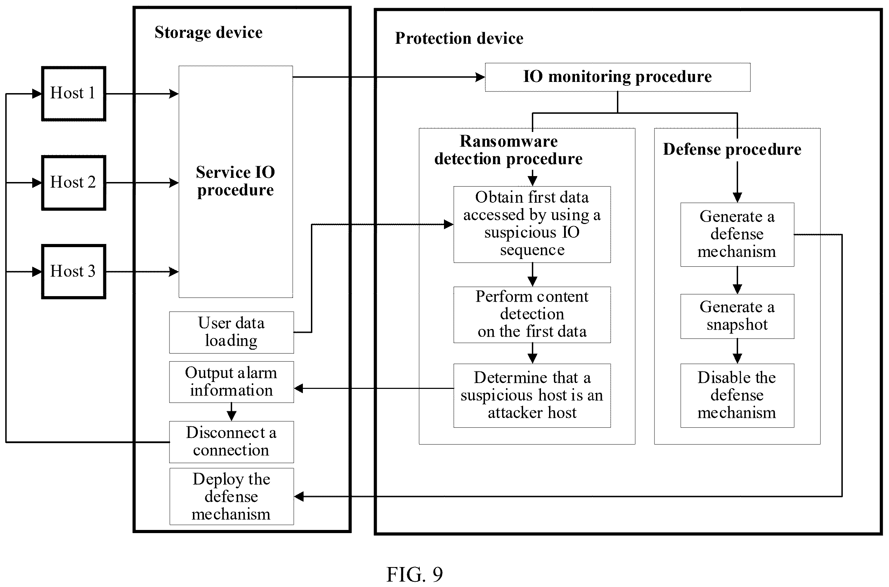

It should be added that, after determining that the storage device has generated the snapshot, the protection device may further send the defense disabling indication to the storage device (without a need to determine that the suspicious host is not an attacker host). Correspondingly, the storage device disables the defense mechanism, and the user data stored in the storage device continues to be normally accessible by the suspicious host. In this way, when the suspicious host is a normal host, the normal host can restore access to the user data in the storage device as soon as possible; or when a normal user application runs in the attacker host, the normal user application can restore access to the user data in the storage device as soon as possible. For specific implementation, refer to the descriptions in the embodiments related to FIG. 6 and FIG. 8. Details are not described again. Based on the flowchart shown in FIG. 8, FIG. 9 is a diagram of another application scenario according to an example of this application. The scenario includes a host 1 to a host 3, a storage device, and a protection device. Further, the storage device can execute a service IO process, and the protection device can execute an IO monitoring process, a ransomware detection process, and a defense process. For descriptions of the processes, refer to the descriptions in the foregoing embodiment related to FIG. 7.

Further, in the IO monitoring process, the protection device may obtain an IO sequence from the storage device, to identify a suspicious IO sequence from the IO sequence. For specific implementation, refer to the descriptions in step 801 and step 802. In the ransomware detection process, the protection device may obtain first data from the storage device. Specifically, the protection device first indicates the storage device to load the first data, and then obtains the first data from the storage device. For specific implementation, refer to the descriptions in step 804. In the defense process, the protection device may deploy a generated defense mechanism in the storage device. Specifically, the protection device indicates the storage device to reject an access request of a suspicious host, or delays a delay in accessing user data stored in the storage device by a suspicious host; or the protection device indicates the storage device to add a preset file to the storage device. For specific implementation, refer to the descriptions in step 803. After determining that the suspicious host is an attacker host, the protection device may further indicate the storage device to display alarm information. After receiving a disconnection indication from an administrator, the storage device disconnects a connection between the attacker host and the storage device. For specific implementation, refer to the descriptions in step 805.

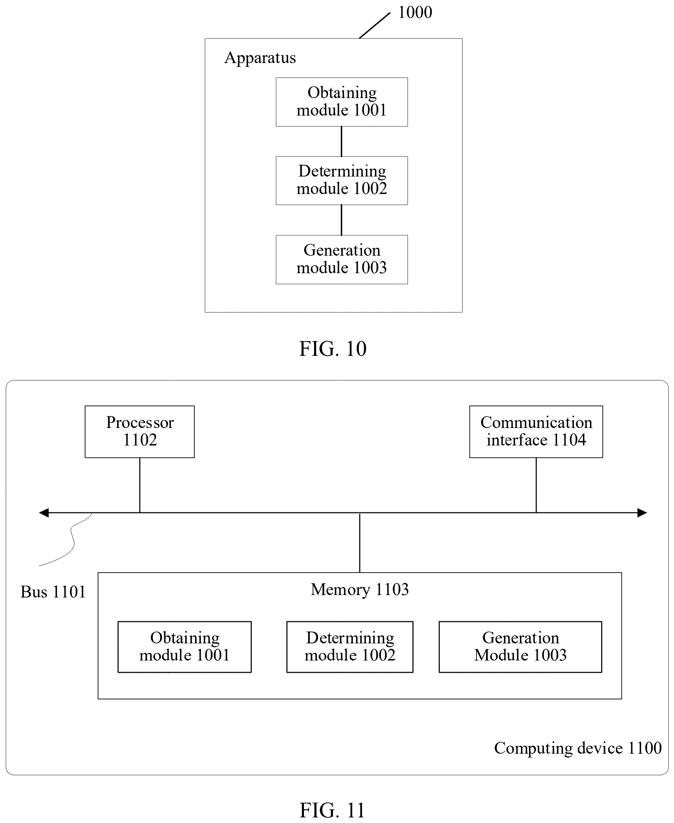

Based on the foregoing content and a same concept, FIG. 10 is a diagram of a structure of a possible data protection apparatus according to this application. The data protection apparatus may be configured to implement functions of the storage device or the protection device in the foregoing method embodiments. Therefore, beneficial effects of the foregoing method embodiments can also be implemented.

In this application, the data protection apparatus may be the storage device shown in FIG. 3, or may be the protection device shown in FIG. 4, or may be a module (for example, a chip) used in the storage device or the protection device.

As shown in FIG. 10, the data protection apparatus 1000 includes an obtaining module 1001, configured to obtain an IO sequence for accessing the storage device; a determining module 1002, configured to determine a suspicious IO sequence from the IO sequence, where the suspicious IO sequence is initiated by a suspicious host when the suspicious host accesses first data in the storage device, the suspicious IO sequence indicates that the suspicious host has a possibility of damaging user data stored in the storage device, and the user data stored in the storage device includes the first data; and a generating module 1003, configured to generate a defense mechanism and a snapshot in response to determining the suspicious IO sequence, where the snapshot is used to restore the user data stored in the storage device, and the defense mechanism is used to prevent, before generating the snapshot is completed, the suspicious host from accessing the user data stored in the storage device. In a possible implementation, the defense mechanism is specifically used to prevent, before generating the snapshot is completed, the suspicious host from accessing second data, and the second data is user data other than the first data stored in the storage device. Based on the foregoing content and a same concept, this application further provides a computing device 1100. As shown in FIG. 11, the computing device 1100 includes a bus 1101, a processor 1102, a memory 1103, and a communication interface 1104. The processor 1102, the memory 1103, and the communication interface 1104 communicate with each other through the bus 1101. The computing device 1100 may be a server. It should be understood that quantities of processors and memories in the computing device 1100 are not limited in this application.

The bus 1101 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of indication, the bus is indicated by using only one line in FIG. 11. However, it does not indicate that there is only one bus or only one type of bus. The bus 1101 may include a path for transmitting information between various components (for example, the memory 1103, the processor 1102, and the communication interface 1104) of the computing device 1100.

The processor 1102 may include any one or more of processors such as a CPU, a GPU, a micro processor (micro processor, MP), or a digital signal processor (digital signal processor, DSP).

The memory 1103 may include a volatile memory (volatile memory), for example, a random access memory (random access memory, RAM). The processor 1102 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1103 stores executable program code, and the processor 1102 executes the executable program code to implement functions of the obtaining module 1001, the determining module 1002, or the generating module 1003, to implement the foregoing data protection method. That is, the memory 1103 stores some or all of the computer program instructions used to perform the data protection method.

The communication interface 1104 uses a transceiver module such as but not limited to a network interface card or a transceiver, to implement communication between the computing device 1100 and another device or a communication network.

All or some of the foregoing embodiments may be implemented using software, hardware, firmware, or any combination thereof. When software is used to implement embodiments, all or some of the foregoing embodiments may be implemented in a form of a computer program product. The computer program product includes one or more computer instructions. When the computer program instructions are loaded and executed on a computer, all or some of the processes or functions according to embodiments of the present disclosure are produced. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, a magnetic tape), an optical medium (for example, a DVD), or a semiconductor medium. The semiconductor medium may be a solid-state drive (solid-state drive, SSD).

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. In this case, if the modifications and variations made to this application fall within the scope of the claims of this application and equivalent technologies thereof, this application is intended to cover these modifications and variations.

## Claims

1. A data protection method, comprising:
obtaining an input/output IO sequence for accessing a storage device;
determining a suspicious IO sequence from the IO sequence, wherein the suspicious IO sequence is initiated by a suspicious host when the suspicious host accesses first data in the storage device, the suspicious IO sequence indicates that the suspicious host has a possibility of damaging data stored in the storage device, and the data stored in the storage device comprises the first data; and
generating a defense mechanism and a snapshot in response to determining the suspicious IO sequence, wherein the snapshot is used to restore the data stored in the storage device, and the defense mechanism is used to prevent, before generating the snapshot is completed, the suspicious host from accessing the data stored in the storage device.

2. The method according to claim 1, wherein the defense mechanism is used to prevent, before generating the snapshot is completed, the suspicious host from accessing second data, and the second data is data other than the first data stored in the storage device.

3. The method according to claim 1, wherein the defense mechanism comprises one or two of A and B:
A: before generating the snapshot is completed, rejecting an access request of the suspicious host to the storage device; and
B: adding preset data to the storage device, so that the suspicious host accesses the preset data before generating the snapshot is completed.

4. The method according to claim 1, wherein after determining the suspicious IO sequence, the method further comprises:
determining whether the first data is damaged by the suspicious IO sequence; and
when determining that the first data is damaged by the suspicious IO sequence, determining that the suspicious host is an attacker host; and/or when determining that the first data is not damaged by the suspicious IO sequence, determining that the suspicious host is a normal host.

5. The method according to claim 4, wherein determining whether the first data is damaged by the suspicious IO sequence comprises:
performing entropy value detection on the first data, to obtain an entropy value of the first data; and
when the entropy value is greater than a preset value, determining that the first data is damaged by the suspicious IO sequence; or when the entropy value is less than or equal to the preset value, determining that the first data is not damaged by the suspicious IO sequence.

6. The method according to claim 5, wherein performing entropy value detection on the first data, to obtain the entropy value of the first data comprises:
performing sampling on the first data, to obtain sampled data; and
performing entropy value detection on the sampled data, to obtain the entropy value of the first data.

7. The method according to claim 4, wherein after determining that the suspicious host is the attacker host, the method further comprises:
displaying alarm information, wherein the alarm information is used by an administrator to determine whether to disconnect a connection between the attacker host and the storage device.

8. The method according to claim 1, wherein after generating the snapshot is completed, the method further comprises:
disabling the defense mechanism, so that the data stored in the storage device is normally accessible by the suspicious host.

9. The method according to any one of claims 1 to 8, wherein
determining the suspicious IO sequence from the IO sequence comprises:
determining, from the IO sequence, a first IO sequence used to access a first file, wherein the first data is the first file; and
when determining that a degree of matching between the first IO sequence and a preset IO sequence is greater than a threshold, determining that the first IO sequence is the suspicious IO sequence, wherein the preset IO sequence is a pre-learned IO sequence that has a possibility of damaging the user data stored in the storage device.

10. The method according to any one of claims 1 to 8, wherein each IO in the IO sequence carries access information, the access information comprises an access address, and the access information further comprises one or two of an access type and access time; and
determining the suspicious IO sequence from the IO sequence comprises:
determining a statistical feature of the IO sequence based on the access information carried in each IO in the IO sequence; and
determining the suspicious IO sequence from the IO sequence based on the statistical feature of the IO sequence, wherein data at access addresses of IOs in the suspicious IO sequence forms the first data.

11. A data protection apparatus, comprising:
an obtaining module, configured to obtain an input/output IO sequence for accessing a storage device;
a determining module, configured to determine a suspicious IO sequence from the IO sequence, wherein the suspicious IO sequence is initiated by a suspicious host when the suspicious host accesses first data in the storage device, the suspicious IO sequence indicates that the suspicious host has a possibility of damaging data stored in the storage device, and the data stored in the storage device comprises the first data; and
a generation module, configured to generate a defense mechanism and a snapshot in response to the determining module determining the suspicious IO sequence wherein the snapshot is used to restore the data stored in the storage device, and the defense mechanism is used to prevent, before generating the snapshot is completed, the suspicious host from accessing the data stored in the storage device.

12. The apparatus according to claim 11, wherein the defense mechanism is used to prevent, before generating the snapshot is completed, the suspicious host from accessing second data, and the second data is data other than the first data stored in the storage device.

13. The apparatus according to claim 12, wherein the defense mechanism comprises one or two of A and B:
A: before generating the snapshot is completed, rejecting an access request of the suspicious host to the storage device; and
B: adding preset data to the storage device, so that the suspicious host accesses the preset data before generating the snapshot is completed.

14. The apparatus according to claim 12, wherein after determining the suspicious IO sequence, the determining module is further configured to:
determine whether the first data is damaged by the suspicious IO sequence; and
when determining that the first data is damaged by the suspicious IO sequence, determine that the suspicious host is an attacker host; and/or when determining that the first data is not damaged by the suspicious IO sequence, determine that the suspicious host is a normal host.

15. The apparatus according to claim 14, wherein when determining whether the first data is damaged by the suspicious IO sequence, the determining module is specifically configured to:
perform entropy value detection on the first data, to obtain an entropy value of the first data; and
when the entropy value is greater than a preset value, determine that the first data is damaged by the suspicious IO sequence; or when the entropy value is less than or equal to the preset value, determine that the first data is not damaged by the suspicious IO sequence.

16. The apparatus according to claim 15, wherein when performing entropy value detection on the first data, to obtain the entropy value of the first data, the determining module is specifically configured to:
perform sampling on the first data, to obtain sampled data; and
performing entropy value detection on the sampled data, to obtain the entropy value of the first data.

17. The apparatus according to claim 14, wherein after determining that the suspicious host is the attacker host, the determining module is further configured to display alarm information, wherein the alarm information is used by an administrator to determine whether to disconnect a connection between the attacker host and the storage device.

18. The apparatus according to claim 12, wherein after completing generating the snapshot, the generating module is further configured to:
disable the defense mechanism, so that the data stored in the storage device is normally accessible by the suspicious host.

19. The apparatus according to any one of claims 12 to 18, wherein
when determining the suspicious IO sequence from the IO sequence, the determining module is specifically configured to:
determine, from the IO sequence, a first IO sequence used to access a first file, wherein the first data is the first file; and
when determining that a degree of matching between the first IO sequence and a preset IO sequence is greater than a threshold, determining that the first IO sequence is the suspicious IO sequence, wherein the preset IO sequence is a pre-learned IO sequence that has a possibility of damaging the user data stored in the storage device.

20. The apparatus according to any one of claims 12 to 18, wherein each IO in the IO sequence carries access information, the access information comprises an access address, and the access information further comprises one or two of an access type and access time; and
when determining the suspicious IO sequence from the IO sequence, the determining module is specifically configured to:
determine a statistical feature of the IO sequence based on the access information carried in each IO in the IO sequence; and
determine the suspicious IO sequence from the IO sequence based on the statistical feature of the IO sequence, wherein data at access addresses of IOs in the suspicious IO sequence forms the first data.

21. A computer-readable storage medium, wherein the computer-readable storage medium stores a computer program or instructions, and when the computer program or the instructions are executed by a computing device, the method according to any one of claims 1 to 10 is implemented.

22. A computer program product, wherein the computer program product comprises a computer program or instructions, and when the computer program or the instructions are executed by a computing device, the method according to any one of claims 1 to 10 is implemented.

23. A computing device, comprising a processor, wherein the processor is connected to a memory, the memory is configured to store a computer program, and the processor is configured to execute the computer program stored in the memory, to cause the computing device to perform the method according to any one of claims 1 to 10.

24. A storage system, comprising a computing device and a storage medium, wherein the computing device is connected to the storage medium, the storage medium is configured to store data, and the computing device is configured to perform the method according to any one of claims 1 to 10.
